Europäisches Patentamt

European Patent Office

Office européen des brevets

(19)

(11) Numéro de publication : **0 433 159 A1**

(12) **DEMANDE DE BREVET EUROPEEN**

(21) Numéro de dépôt : **90403522.7**

(22) Date de dépôt : **11.12.90**

(51) Int. Cl.⁵ : **B64C 31/02, F42B 10/56**

(30) Priorité : **15.12.89 FR 8916614**

(43) Date de publication de la demande :
**19.06.91 Bulletin 91/25**

(84) Etats contractants désignés :
**DE GB IT SE**

(71) Demandeur : **THOMSON-BRANDT ARMEMENTS**
**Tour Chenonceaux 204, rond-point du Pont de Sèvres**
**F-92516 Boulogne-Billancourt (FR)**

(72) Inventeur : **Esterlin, Jacques**
**Thomson-CSF, SCPI, Cedex 67**
**F-92045-Paris La Defense (FR)**

(74) Mandataire : **Benoit, Monique et al**
**THOMSON-CSF SCPI**
**F-92045 PARIS LA DEFENSE CEDEX 67 (FR)**

(54) **Système déployable pour l'emport et la sustentation d'une munition.**

(57)    L'invention concerne une munition lancée en direction d'une cible à l'aide d'un système de lancement (3) et plus particulièrement sa capacité de manoeuvre vers une cible masquée ou non mobile ou non dans la direction de sa trajectoire. Pour accroître l'efficacité d'une munition, il est indispensable d'en améliorer la précision sans augmenter considérablement le coût de réalisation d'une telle munition. Pour cela, la munition contenant une charge utile (7), est équipée d'un système d'emport (8) déployable fixé à ladite charge. Lors de l'éjection du système d'emport (8) et de la charge de la munition (1), le système d'emport se déploie. Le système d'emport comprend une voilure (15) fixée sur des moyens de maintien extensibles (14), l'ensemble étant relié à la charge par des suspentes (18) dont la longueur varie suivant les informations transmises par au moins un capteur positionné sur l'extrémité de la charge afin d'en assurer le guidage.

Application du système d'emport selon l'invention à toute munition destinée à observer ou attaquer une zone masquée ou non pour détecter et détruire, s'il y a lieu, une cible déterminée en mouvement ou non.

FIG_1

ZONE 2

EP 0 433 159 A1

## SYSTEME DEPLOYABLE POUR L'EMPORT ET LA SUSTENTATION D'UNE MUNITION

L'invention concerne une munition lancée en direction d'une cible à l'aide d'un système de lancement. Elle concerne plus particulièrement un système d'emport déployable, après lancement de la munition, pour diriger la charge de la munition vers une cible déterminée en attaquant cette dernière par le dessus.

Parmi les systèmes "d'attaque" de position stratégique contre des cibles mobiles ou non (chars, hélicoptères...), par exemple, masquées par des bois ou des collines et dont la performance est continuellement remise en cause, il existe des systèmes munis de munitions, par exemple, tirés d'une batterie de tir, dont la trajectoire, préalablement déterminée en site et azimut, permet le survol des différents masques pour atteindre les zones contenant les cibles. La plupart de ces munitions ont une trajectoire freinée par un système de freinage souvent constitué d'un parachute ralentissant la vitesse de descente de la munition et donnant ainsi une marge de manoeuvre suffisante à la cible mobile lui permettant d'éviter la charge de la munition.

Le but de l'invention est de remédier aux inconvénients précités en proposant une munition guidée grâce à un système adapté auto-destructible permettant, d'une part, de suivre une direction choisie et déterminée par un appareil de détection pendant le survol d'une zone masquée et, d'autre part, d'améliorer la vitesse d'exécution de toute l'opération.

L'invention a pour objet un système déployable pour l'emport d'une charge utile, caractérisé en ce qu'il comprend une voilure, des moyens de maintien extensibles sur lesquels est fixée la voilure, de manière à assurer la mise en forme de la voilure, et des moyens assurant la variation de la longueur de suspentes reliant les moyens de maintien extensibles à la charge utile pour permettre de diriger la dite charge utile.

L'invention et ses caractéristiques seront mieux comprises à la lecture de la description qui suit et qui est annexée des figures suivantes :

- figure 1, un schéma de la trajectoire d'une munition équipée du système d'emport selon l'invention ;
- figure 2, une munition équipée du système d'emport selon l'invention ;
- figure 3, un premier exemple de réalisation du système d'emport en position déployée selon l'invention ;
- figure 4, un deuxième exemple de réalisation du système d'emport en position déployée selon l'invention.

Pour plus de clarté, les mêmes éléments portent les mêmes références dans toutes les figures. La description donne à titre explicatif, mais nullement limitatif, le fonctionnement d'un système d'emport appliqué à une charge placée à l'intérieur d'une munition.

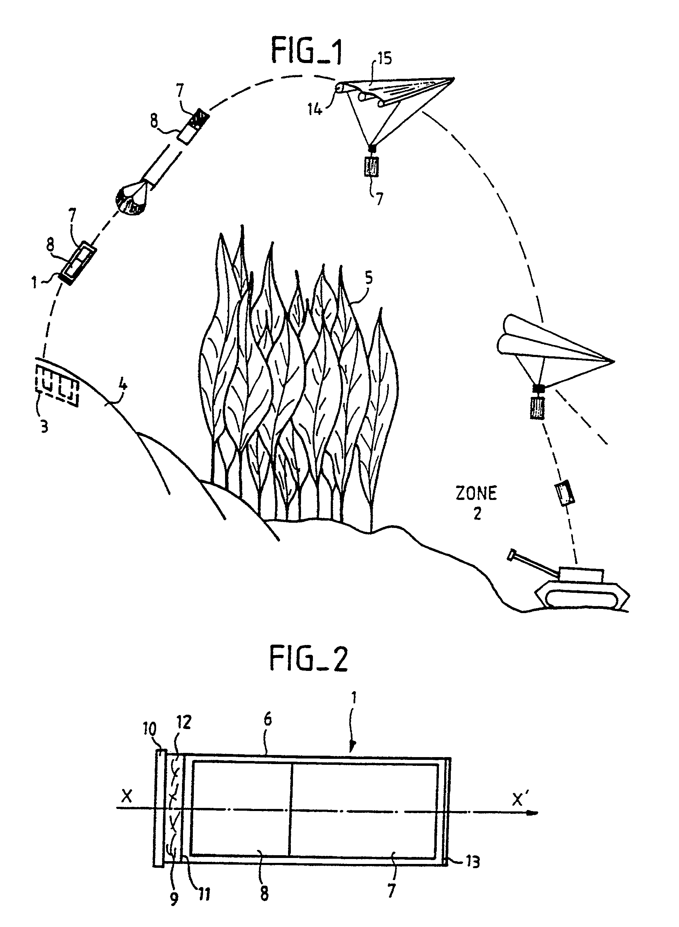

La figure 1 représente la trajectoire d'une munition 1 équipée du système d'emport 8 selon l'invention ; cette munition 1 est, par exemple, tirée d'une batterie de tir 3 positionnée dans un lieu déterminé, par exemple, non loin d'une zone stratégique non représentée ; cette batterie de tir 3 est, par exemple, camouflée dans le sol 4 pour éviter tout repérage. La munition 1 survole ensuite un masque, par exemple un bois 5 pour observer l'espace non visible d'une zone à partir de la zone stratégique. Lors d'une détection d'une cible, par exemple, par un détecteur fixé sur un des modules de la munition 1, cette dernière, équipée d'un système d'emport selon l'invention, est dirigée sur la cible pour la détruire. Dans le cas contraire, elle s'auto-détruit pour éviter tout repérage permettant de donner des informations à l'ennemi. La destruction de la munition est réalisée par des moyens de destruction positionnés à l'intérieur de la munition et non représentés sur la figure. Au cours de la trajectoire de la munition 1, différentes phases se déroulent. En effet, la munition 1 contenant différents modules les libère pour qu'ils remplissent chacun une fonction déterminée. La munition 1 représentée sur la figure 2 est orientée, par exemple, selon l'axe XX' qui est aussi la direction de lancement de la munition 1. Cette munition 1 comprend une enveloppe 6 à l'intérieur de laquelle sont placés, par exemple, une charge utile 7, un système d'emport 8 et un parachute 9. La charge utile 7 contient, par exemple, un élément explosif ou autres mais elle peut contenir également une multitude de sous-charges contenant également chacune un élément explosif ou autres par exemple, une caméra. La partie arrière de l'enveloppe 6 est terminée, par exemple, par un couvercle 10 permettant la fermeture de l'enveloppe 6. Une paroi 11 fixée, par exemple, à l'intérieur de l'enveloppe 6 et solidaire de celle-ci, sert de limite à un emplacement 12 à l'intérieur duquel est placé un premier système de freinage, par exemple, un parachute 9. Ce premier système de freinage est relié à la paroi 11 pour être solidaire de l'enveloppe 6. Comme le montre la figure 1, à un instant de vol préprogrammé compte tenu de la distance de la zone à survoler, le couvercle 10 de la munition 1 est éjecté, par exemple, sous l'action des forces aérodynamiques ; cette éjection du couvercle 10 libère le parachute 9 assurant ainsi le freinage de l'enveloppe 6. Ce freinage brutal de l'enveloppe 6 provoque la projection des modules 7 et 8 liés entre eux contre une fermeture 13 placée à l'avant de la munition 1 entraînant la libération de la fermeture 13 et autorisant ainsi l'éjection des modules 7 et 8. Ces modules 7 et 8 constitués, par exemple, du système d'emport 8 et d'une charge utile 7 contenant de l'explosif ou autres sont liés entre eux, par exemple, par des suspentes non représentés sur les figures 1 et 2. Le système d'emport 8 est constitué, par exemple, d'une voilure, par exemple, auto-destructible pour éviter toute récupération, qui assure, d'une part, le freinage de la charge 7 au cours de sa phase descendante et, d'autre part, autorise un guidage de cette charge. La couleur de cette voilure est relativement neutre de manière à éviter un repérage rapide de l'ensemble. Le guidage est obtenu, par action sur le système de liaison existant entre la charge utile 7 et le système d'emport 8. A une certaine distance du sol, le système d'emport et la charge utile 7 peuvent se séparer pour larguer la charge utile lorsqu'elle arrive sur l'objectif ou bien, un détecteur intégré à la charge utile 7 déclenche la mise à feu de celle-ci lors du survol de la cible. Le système d'emport ainsi séparé s'auto-détruit.

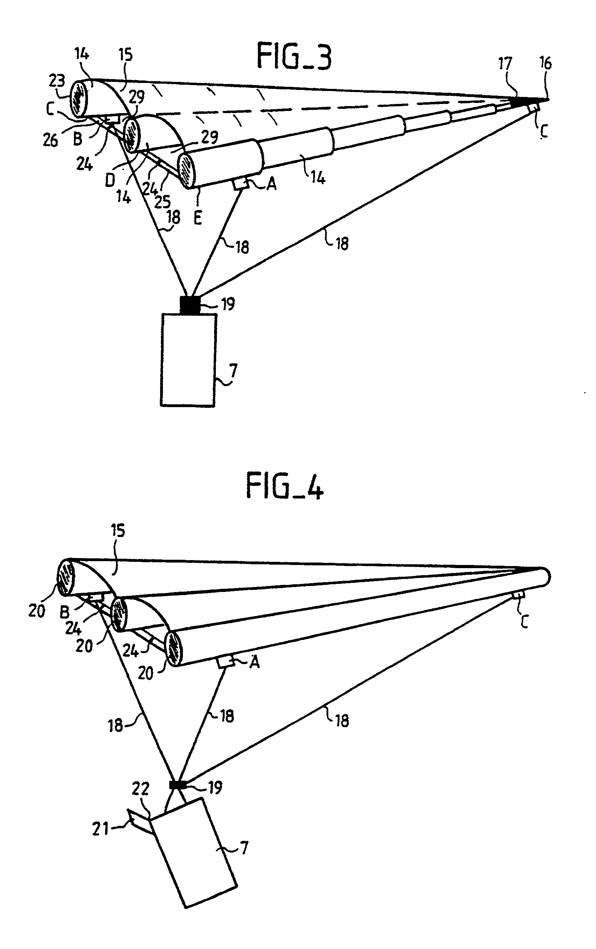

Le système d'emport est représenté en position déployée sur les figures 3 et 4. Ces deux modes de réalisation sont représentés sur les figures 3 et 4 à titre d'exemples non limitatifs. La figure 3 montre un système d'emport déployable comprenant, des moyens de maintien extensibles permettant le déploiement, par exemple, de la voilure. Ces moyens de maintien extensibles comportent, par exemple, trois cannes télescopiques 14 munies, par exemple, de ressorts non visibles sur cette figure pour permettre, après éjection du système d'emport de la munition 1, le déploiement de ces dernières. Des systèmes de mise en pression peuvent également être utilisés pour permettre le déploiement des cannes télescopiques 14. Les cannes télescopiques 14 sont munies, par exemple, de système de fixation et de glissières non représentés sur la figure pour permettre à une voilure 15 de se déplier lors du déploiement de ces cannes télescopiques. La voilure 15 est, par exemple, constituée par une toile suffisamment rigide pour résister à la pression de l'air. Les cannes télescopiques ont, par exemple un point de convergence situé à une première extrémité 16 pour améliorer la pénétration dans l'air de l'ensemble constitué par le système d'emport 8 et la charge utile 7. Les trois cannes télescopiques sont reliées à la première extrémité 16, par exemple, par un système autobloqueur 17 assurant une rigidité au point de convergence. A une deuxième extrémité 23 positionnée à l'opposé de l'extrémité 16 du point de convergence des cannes télescopiques 14, des moyens d'écartement 24 sont placés, par exemple, à l'arrière des cannes télescopiques pour permettre d'assurer un écartement minimum nécessaire au bon fonctionnement du système d'emport. Pour un système d'emport comportant, par exemple, trois cannes télescopiques 14, deux moyens d'écartement sont utilisés pour le déploiement du système d'emport. Les moyens d'écartement 24 sont constitués, par exemple, de deux éléments télescopiques 25 et 26 (figure 3) qui sont fixés entre chaque extrémité 29 des cannes télescopiques 14 aux points C, D et E. Ces moyens d'écartement possèdent, par exemple, un moyen de verrouillage, non visible, sur la figure 3 qui assure, après le déploiement des moyens d'écartement un éloignement des cannes télescopiques 14 en empêchant, après le verrouillage, tout rapprochement des cannes télescopiques pendant la phase de vol du système d'emport. Les moyens d'écartement peuvent être réalisés par d'autres moyens notamment par des boudins gonflables. La longueur des cannes télescopiques et la dimension de la voilure sont déterminées en fonction de la charge à transporter. Ce système d'emport ainsi déployé est lié à la charge, par exemple, par des suspentes 18 auto-réglables. En effet, avant de pouvoir orienter le système d'emport dans une direction déterminée, il est nécessaire de détecter la cible, pour cela, au moins un capteur est placé à l'intérieur de la charge 7. Chaque information reçue par le capteur est transmise, par exemple, à des moyens de calcul placés à l'intérieur d'un boîtier 19 positionné, par exemple, sur l'extrémité inférieure de la charge utile 7. Le capteur est, par exemple, un détecteur millimétrique et/ou infrarouge. Le boîtier 19 possède également des moyens, par exemple, mécaniques, en liaison avec les moyens de calcul recevant les informations du capteur ; ces moyens mécaniques agissent sur la longueur des suspentes 18 pour diriger l'ensemble vers l'objectif à atteindre. Les suspentes 18 servant de liaison entre les deux modules, sont par exemple au nombre de trois et elles sont fixées sur les cannes télescopiques aux emplacements A, B et C. Ce choix n'est nullement limitatif, le nombre et l'emplacement des différents éléments c'est-à-dire des points d'attache et des suspentes étant choisis pour obtenir le meilleur équilibre de l'ensemble. Il est possible d'augmenter la vitesse d'exécution de la phase de guidage qui, dans notre cas, est faite sous l'action des forces aérodynamiques, en donnant une vitesse supplémentaire à l'ensemble constitué de la charge et du système d'emport. Pour cela, un dispositif propulsif, par exemple, un propulseur à réaction, sera monté sur le système d'emport avec un certain nombre de mécanismes assurant la mise en oeuvre du dispositif.

La figure 4 représente un autre mode de réalisation du système d'emport et notamment des moyens de maintien extensibles qui peuvent être constitués, par exemple, de trois boudins gonflables 20, le nombre d'éléments constituant les moyens de maintien extensibles étant non limitatif. Ce système d'emport comporte également des moyens d'écartement 24 qui sont au nombre de deux sur la figure 4 mais qui pourraient être agencés différemment pour être constitués d'un autre nombre d'éléments. Le gonflage des boudins est effectué au moyen, par exemple, d'un générateur de gaz ou d'une bouteille de gaz comprimé placé à l'intérieur du système d'emport et non représenté. Dans ce mode de réalisation, le principe des éléments convergents a été retenu mais il est possible d'utiliser, dans d'autres réalisations, des éléments placés parallèlement les uns aux autres, ces éléments étant séparés, dans tous les cas, par une voilure fixée à chacun des éléments par des moyens de fixation non représentés. Dans le cas des éléments placés parallèlement les uns aux autres, il est indispensable d'utiliser, par exemple, au moins deux systèmes d'écartement placés, par exemple, à l'avant et à l'arrière des moyens de maintien extensibles pour faciliter l'ouverture du système d'emport et permettre une phase de guidage. D'autre part, l'agencement des suspentes 18 peut être conçu de manière à ce qu'une libre rotation de la charge utile 7 soit possible; cette libre rotation permet à la charge 7 de décrire une trajectoire hélicoïdale facilitant la recherche d'une cible éventuelle. De ce fait, un système de mise en position inclinée est monté sur la charge utile 7. Ce système, non représenté sur cette figure, libère également un système de mise en auto-rotation constitué, par exemple, d'au moins une pâle 21 de mise en rotation de la charge utile 7 ; cette pâle 21 est fixée, à l'une de ses extrémités 22, à la charge utile 7 et est maintenue, en position repliée, le long du corps de la charge utile 7 avant son déverrouillage par le système de mise en position inclinée qui autorise le déploiement de la pâle 21 autour de son extrémité 22. La rotation de la charge utile 7 ainsi que sa mise en position inclinée permettent d'obtenir un balayage en spirale, par exemple, du sol, ce qui augmente considérablement les chances de détection d'une cible. Pour éviter le vrillage éventuel des suspentes 18 dû à l'utilisation des dispositifs décrits précédemment le boîtier 19 sera équipé d'un dispositif mécanique assurant une libre rotation de la charge utile 7 par rapport au système d'emport déployé 8.

L'invention s'applique non seulement à une charge utile contenue à l'intérieur d'une munition mais à toute munition tirée ou lancée d'un endroit quelconque, par exemple du sol ou d'un avion, pour permettre à celle-ci de se déplacer afin de pouvoir mieux détecter les cibles éventuelles grâce aux différents systèmes de détection équipant chacune des munitions.

**Revendications**

1. Système déployable pour l'emport d'une charge utile (7), caractérisé en ce qu'il comprend une voilure (15), des moyens de maintien extensibles (14, 20) sur lesquels est fixée la voilure (15), de manière à assurer la mise en forme de la voilure (15), des moyens assurant la variation de la longueur de suspentes (18) reliant les moyens de maintien extensibles à la charge utile (7) pour permettre de diriger la dite charge utile (7) et en ce que la charge utile supportée par le système d'emport est équipée d'un capteur.

2. Système d'emport selon la revendication 1, caractérisé en ce que le capteur de la charge agit sur la longueur des suspentes (18) par l'intermédiaire de moyens mécaniques reliés à des moyens de calcul analysant les informations reçues du capteur, ces moyens étant positionnés à l'intérieur d'un boîtier (19).

3. Système d'emport selon la revendication 1, caractérisé en ce que les moyens de maintien extensibles sont des cannes télescopiques (14).

4. Système d'emport selon la revendication 1, caractérisé en ce que les moyens de maintien extensibles sont des boudins gonflables (20).

5. Système d'emport selon la revendication 2, caractérisé en ce que les suspentes (18) servant de liaison entre la charge et le système d'emport sont au nombre d'au moins trois.

6. Système d'emport selon la revendication 1, caractérisé en ce que les moyens de maintien convergent à leur extrémité (16).

7. Système d'emport selon la revendication 6, caractérisé en ce que la convergence des moyens de maintien est réalisée par un système auto-bloqueur (17).

8. Système d'emport selon la revendication 1, caractérisé en ce que l'ensemble constitué de la voilure (15) et des moyens de maintien extensibles (14, 20) est équipé d'un dispositif propulsif pour augmenter la vitesse de déplacement du système d'emport.

9. Système d'emport selon la revendication 4, caractérisé en ce qu'un générateur de gaz ou une bouteille de gaz comprimé assure le gonflage des boudins (20).

10. Système d'emport selon la revendication 1, caractérisé en ce que le système d'emport est positionné à l'intérieur d'une munition (1) et en ce qu'il est fixé à une charge utile (7) de la munition.

11. Système d'emport selon la revendication 10, caractérisé en ce que la munition (1) contenant la charge utile (7) et le système d'emport (8) est équipée d'un système de freinage comprenant une parachute (9) pour favoriser l'éjection de la charge utile (7) et du système d'emport (8).

12. Système d'emport selon la revendication 1, caractérisé en ce qu'il comporte des moyens d'écartement (24) positionnés entre les moyens de maintien extensibles pour assurer le déploiement du système d'emport.

13. Système d'emport selon la revendication 12, caractérisé en ce que les moyens d'écartement (24) sont des éléments télescopiques (25 et 26).

# FIG_1

# FIG_2

FIG_3

FIG_4

Office européen
des brevets

# RAPPORT DE RECHERCHE EUROPEENNE

Numero de la demande

EP 90 40 3522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 390 852 (MILLER) <br> * Figures 1-3,10-12,24; colonne 2, lignes 42-46 * | 1-7,9-12 | B 64 C 31/02 <br> F 42 B 10/56 |
| Y | US-A-3 286 957 (LIBBEY) <br> * Colonne 2, lignes 24-31; colonne 4, lignes 18-75; colonne 5, lignes 1-37; figures 1,3,5 * | 1-3,5-7 | |
| A | | 11 | |
| Y | US-A-3 301 511 (WEBB) <br> * Colonne 1, ligne 69 - colonne 2, lignes 50-52; figures * | 4,9 | |
| Y | FR-A-2 595 811 (DIEHL) <br> * Abrégé; figure 3 * | 10,11 | |
| Y | US-A-3 381 919 (GIRARD) <br> * Colonne 4, lignes 19-31; figure 1; colonne 2, lignes 20-42 * | 12 | |
| A | | 1,2 | DOMAINES TECHNIQUES RECHERCHES (Int. Cl.5) |
| A | US-A-3 212 730 (TSCHUDY) | | B 64 C <br> F 42 B |

Le présent rapport a été établi pour toutes les revendications

| Lieu de la recherche | Date d'achèvement de la recherche | Examinateur |
|---|---|---|
| LA HAYE | 06-01-1991 | RODOLAUSSE P.E.C.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8